Europäisches Patentamt

European Patent Office

Office européen des brevets

(19)

(11) Publication number: **0 270 681**
**A1**

## (12) EUROPEAN PATENT APPLICATION

published in accordance with Art. 158(3) EPC

(21) Application number: **87903406.4**

(22) Date of filing: **16.05.87**

Data of the international appli-
cation taken as a basis:

(86) International application number:
**PCT/JP 87/00309**

(87) International publication number:
**WO 87/07414 (03.12.87 87/27)**

(51) Int. Cl.⁴: **G 06 F 15/70**

(30) Priority: **29.05.86 JP 124237/86**

(43) Date of publication of application: **15.06.88**
**Bulletin 88/24**

(84) Designated Contracting States: **DE FR GB**

(71) Applicant: **FANUC LTD, 3580, Shibokusa Aza-Komanba
Oshino-mura, Minamitsuru-gun Yamanashi 401-05 (JP)**

(72) Inventor: **KURAKAKE, Mitsuo, Izumi-Haitsu 103 3-3-10,
Tamadaira, Hino-shi Tokyo 191 (JP)**
Inventor: **OTSUKA, Shoichi, 4-16-16, Hinodai, Hino-shi
Tokyo 191 (JP)**
Inventor: **MURAOKA, Yutaka, Fanuc Utsuki-ryo 386-1,
Ishikawa-machi, Hachioji-shi Tokyo 192 (JP)**

(74) Representative: **Brunner, Michael John et al, GILL
JENNINGS & EVERY 53-64 Chancery Lane, London
WC2A 1HN (GB)**

(54) **IMAGE PROCESSING SYSTEM.**

(57) An image processing system comprises original image
data (I), a delay circuit (4) which shifts the original image
data in a lateral direction by N pixels, a frame memory (2)
which obtains data by shifting the original image data (1) in
a vertical direction by N pixels, and an address counter (3b).
The data are calculated by an operation circuit (5) to deter-
mine a differential value (difference) in order to pick up a
contour of a simple figure which is constituted by vertical
lines, horizontal lines and lines of a direction tilted at 45°.

FRAME MEMORY

FRAME MEMORY

FRAME MEMORY

- 1 -

# DESCRIPTION

## IMAGE PROCESSING SYSTEM

### Technical Field

The present invention relates to an image processing system for use in a robot or the like, and more particularly to an image processing system for producing differentials with a simple circuit.

### Background Art

Image processing systems for use in robots or the like process image information to determine the sum of products thereof to find differentials of an image for obtaining the profile of the image or sharpening the image. For example, such image processing systems are disclosed in Japanese Laid-Open Patent Publication No. 61-241877, Japanese Laid-Open Patent Publication No. 61-241878, and Japanese Laid-Open Patent Publication No. 61-241879, for example. With the system for processing image information to determine the sum of products thereof, an image such as a complex graphic form can be processed, but the circuit arrangement is complex for processing a simple graphic image, and a considerable processing time is needed.

## Disclosure of the Invention

It is an object of the present invention to provide an image processing system which will solve the above problems and can process a simple graphic image in a short processing time with a simple circuit arrangement.

To eliminate the aforesaid difficulties, there is provided according to the present invention an image processing system comprising:

horizontal shifting means for shifting original image information N pixels horizontally from data thereof;

vertical shifting means for shifting the original image information N pixels vertically from the data thereof; and

processing means for producing differentials of data shifted by the horizontal and vertical shifting means and the original image information.

With the present invention, a horizontal differential, e.g., a vertical profile, is obtained from the difference between the horizontally shifted data and the original image information, and a vertical differential, e.g., a horizontal profile, is obtained from the difference between the vertically shifted data and the original image information. By combining both of the profiles, a differential in any desired direction can be obtained. For example, the profile of a simple praphic image such as an image composed of a vertical line, a horizontal line, and a line inclined at 45$^\circ$ can be drawn at high speed with a simple arrangement.

Brief Description of the Drawings

FIG. 1 is a block diagram of an embodiment of the present invention; and

FIG. 2 is a diagram showing correspondence between original image information data and converted data according to the embodiment of the invention.

Best Mode for Carrying Out the Invention

An embodiment of the present invention will hereinafter be described in specific detail with reference to the drawings.

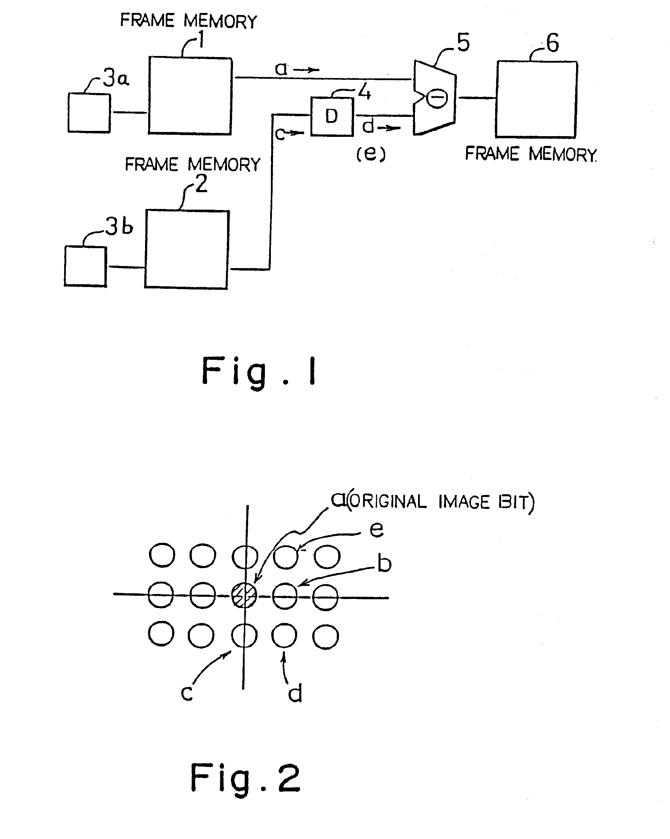

FIG. 1 shows in block form an embodiment of the present invention. Denoted at 1 is a frame memory storing oridinal image information data, and 2 a frame memory identical to the frame memory 1 and storing the same oridinal image information data as that stored in the frame memory 1. The frame memory 1 and the frame memory 2 are associated respectively with address counters 3a, 3b for specifying addresses of rows, and shift data by N rows (vertically by N pixels) and issue the same based on the difference between the counts of the two address counters.

For example, assuming that when the difference between the counts of the counters is "1" (stated otherwise, the difference between the numerical values of the address counters 3a, 3b is "1"), the frame memory 2 issues data which has been shifted one row with respect to the original image information data stored in the frame memory 1. A delay circuit 4 shifts the serial output from the frame memory 2 by N lines (horizontally N pixels). For example, if data is to be delayed one pixel, the delay circuit 4 issues data which is shifted one line. A processing circuit 5 produces a value obtained by subtracting a lower input from an upper input. A frame memory 6 has the same structure and capacity as those of the frame memory 4 and stores processed image data.

Operation of the embodiment will now be described. FIG. 2 shows correspondence between image information data according to the embodiment of the invention. It is assumed here that the output of the frame 1, i.e., the original image information data is designated by "a", that data which is obtained by shifting the original image information data horizontally by one pixel is designated by "b", that data which is obtained by shifting the original image information data vertically by one pixel is designated by "c", that data which is obtained by shifting the original image information data horizontally by one pixel and vertically by one pixel is designated by "d", and that data which is obtained by shifting the original image information data horizontally by one pixel and upwardly by one pixel is designated by "e".

(1) A horizontal differential, e.g., a vertical profile can be determined by a - b. To effect this, the difference between the count of the counter 3a for the frame memory 1 and the count of the counter 3b for the frame memory 2 is set to "0". The output of the frame memory 1, which corresponds to "a" in FIG. 2, is issued, and the output of the frame memory 2, which corresponds to "a" in FIG. 2, is issued. The output of the frame memory 2 is shifted one pixel horizontally by the delay circuit 4, which issues data corresponding to "b" in FIG. 2. The difference between both outputs is found by the processing circuit 5, and hence the above formula is obtained.

(2) A vertical differential, e.g., a horizontal profile can be determined by a - c. To effect this, the difference between the count of the counter 3a and the count of the counter 3b is set "1", and the delay number of the delay circuit 4 is set to "0" (or the delay circuit 4 is bypassed). The output of the frame memory 1, which corresponds to "a" in FIG. 2, is issued, and the output of the frame memory 2, which corresponds to "c" in FIG. 2, is issued. The difference between the outputs is found by the processing circuit 5, and hence the above formula is attained.

(3) The profile of a line inclined (at 45$^{\circ}$) upwardly on the right can be given by a - d. To effect this, the difference between the count of the counter 3a and the count of the counter 3b is set "1", and the delay number of the delay circuit 4 is set to "1". The output of the frame memory 1, which corresponds to "a" in FIG. 2, is issued, and the output of the frame memory 2, which corresponds to "d" in FIG. 2, is issued. The difference between the outputs is given by the processing circuit 5, and hence the above formula is attained.

(4) The profile of a line inclined (at 135$^{\circ}$) upwardly on the left can be given by a - e. To effect this, the count of the counter 3b is selected to be one larger than the count of the counter 3b with respect to the determination of the profile of the line inclined (at 45$^{\circ}$) upwardly on the right. The output of the frame memory 1, which corresponds to "a" in FIG. 2, is issued, and the output of the frame memory 2, which corresponds to "e" in FIG. 2, is issued. The above formula is now obtaineda.

Therefore, differentials of graphic information can be determined with a simple circuit arrangement. The time required for processing is shorter than a process for determining the sum of products.

Graphic images in directions at $90^{\circ}$ and $45^{\circ}$ can thus be extracted. Simple graphic images can be processed with a simple circuit arrangement in a short period of time (i.e., a time required to scan pixels in one frame once) without using a process for determining the sum of products.

Moreover, a profile in any desired direction can be extracted in which the difference in a row direction is expressed as $\Delta$ y pixels and a delay element is expressed as $\Delta$ x pixels.

To obtain a differential image of equal clearness, the relationship $(\Delta x)^2 + (\Delta y)^2 = $ a constant should be met. By selecting a delay bit number and a shift number as desired, image processing operations corresponding to graphic images to be processed can be performed.

With the present invention, as described above, differentials of present image information data and data obtained by delaying the present image information data by N bits, and differentials of the present image information data and data obtained by shifting the present image information data by N rows, are determined for processing images. The circuit arrangement is simple and the image processing time is short.

0270681

- 8 -

## CLAIMS

1. An image processing system comprising:

horizontal shifting means for shifting original image information N pixels horizontally from data thereof;

vertical shifting means for shifting the original image information N pixels vertically from the data thereof; and

processing means for producing differentials of data shifted by the horizontal and vertical shifting means and the original image information.

2. An image processing system according to claim 1, wherein the original image information is horizontally shifted by 0.

3. An image processing system according to claim 1, wherein the original image information is horizontally shifted by 0.

4. An image processing system according to claim 1, wherein the original image information is horizontally shifted by one pixel and vertically shifted by one pixel.

FRAME MEMORY

FRAME MEMORY

FRAME MEMORY.

Fig. 1

a(ORIGINAL IMAGE BIT)

e

b

c

d

Fig. 2

**I. CLASSIFICATION OF SUBJECT MATTER** (if several classification symbols apply, indicate all) 3

According to International Patent Classification (IPC) or to both National Classification and IPC

Int.Cl$^4$　　G06F15/70

**II. FIELDS SEARCHED**

| Minimum Documentation Searched 4 | |
|---|---|
| Classification System | Classification Symbols |
| IPC | G06F15/62-15/72, G06K9/36, 9/46 |

| Documentation Searched other than Minimum Documentation<br>to the Extent that such Documents are Included in the Fields Searched 5 |
|---|
| Jitsuyo Shinan Koho　　　　　　1971 - 1986<br>Kokai Jitsuyo Shinan Koho　1971 - 1986 |

**III. DOCUMENTS CONSIDERED TO BE RELEVANT 14**

| Category * | Citation of Document, 16 with indication, where appropriate, of the relevant passages 17 | Relevant to Claim No. 18 |
|---|---|---|
| X | JP, A, 60-7584 (Shimadzu Corporation)<br>16 January 1985 (16. 01. 85)<br>(Family: none) | 1-4 |
| X | JP, A, 58-172768 (Fujitsu Ltd.)<br>11 October 1983 (11. 10. 83)<br>(Family: none) | 1-4 |
| X | JP, A, 59-95679 (Fujitsu Ltd.)<br>1 June 1984 (01. 06. 84)<br>(Family: none) | 1-4 |
| X | JP, A, 58-219683 (Matsushita Electric<br>Ind. Co., Ltd.)<br>21 December 1983 (21. 12. 83)<br>(Family: none) | 1-4 |
| A | JP, A, 48-43246 (Toshiba Corp.)<br>22 June 1973 (22. 06. 73)<br>(Family: none) | 1-4 |

* Special categories of cited documents: 15

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search 2 | Date of Mailing of this International Search Report 2 |
|---|---|
| July 14, 1987 (14. 07. 87) | July 27, 1987 (27. 07. 87) |
| International Searching Authority 1 | Signature of Authorized Officer 20 |
| Japanese Patent Office | |